# FASCICULE DE BREVET EUROPEEN

(11) **EP 3 386 891 B1**
(45) Date de publication et mention de la délivrance du brevet: **23.10.2019**
(21) Numéro de dépôt: 16819988.3
(22) Date de dépôt: 08.12.2016
(51) Int. Cl.: B65G 17/06, B65G 47/19, G01G 11/12, G01G 11/14, B65G 17/48

(54) **INSTALLATION D'EXTRACTION A DÉBIT RÉGULIER**
EXTRAKTIONSEINHEIT MIT REGELMÄSSIGEM STROM
REGULAR-FLOW EXTRACTION UNIT

(30) Priorité: 09.12.2015 FR 1562096
(43) Date de publication de la demande: 17.10.2018
(73) Titulaire: Appalette Tourtellier Systèmes, 68200 Mulhouse (FR)
(72) Inventeur: RIEFFEL, Luc, 68640 Muespach (FR)
(74) Mandataire: Hege, Frédéric
(86) Numéro de dépôt international: PCT/FR2016/053265
(87) Numéro de publication internationale: WO 2017/098156

(56) Documents cités:
- EP-A1- 0 273 313
- EP-A1- 0 540 126
- EP-A1- 1 111 352
- WO-A1-2012/012854
- FR-A1- 2 924 202
- US-A- 3 430 751

## Description

La présente invention se situe dans le domaine de la manutention de vrac. Elle concerne une installation et un procédé d'extraction, par exemple pour pneus usagés déchiquetés, déchets municipaux broyés grossièrement, déchets commerciaux, papiers, textiles, etc. L'invention se rapporte plus particulièrement à une installation et à un procédé d'extraction destiné à être utilisée pour l'alimentation d'un four, en particulier un four rotatif de type four de cimenterie ou four à chaux en combustibles alternatifs solides.

Les fours rotatifs visés sont ceux des cimenteries mais aussi de fabriques de chaux et tous les autres fours fonctionnant à haute température. Les fours de cimenterie fonctionnent avec une flamme d'un côté de la partie cylindrique, produisant les températures élevées nécessaires dans ce type de four, la matière première - calcaire, argile essentiellement - étant introduite du côté opposé. Ainsi, la matière première est réchauffée petit à petit à l'approche de la flamme et est transformée chimiquement à proximité de cette flamme en clinker, lequel peut, après refroidissement, être broyé et, avec certains additifs, former du ciment.

On peut ajouter des combustibles alternatifs aux combustibles classiques - charbon, pétrole, gaz - au niveau de cette flamme, mais comme on se situe à la sortie des produits transformés, il faut être certain que ces combustibles sont entièrement consumés avant de l'adjoindre au clinker. Cela impose de n'utiliser que des produits fins dans cette zone. Une autre raison vient du fait que les combustibles envoyés dans la flamme doivent brûler avant de tomber sur la paroi du cylindre, sinon ils risquent de détériorer rapidement le revêtement réfractaire de ce cylindre. Les combustibles doivent donc comporter au moins une dimension très petite (comme des feuilles).

De plus en plus de fours sont équipés du côté de l'alimentation en matière première de tours dites « de préchauffage » dont la fonction est de faire profiter de la chaleur des gaz du four à la matière première qui arrive, en constituant une sorte d'échangeur de chaleur. Ainsi, la matière première arrive dans la partie cylindrique du four déjà chaude et la transformation chimique nécessite moins d'énergie. Cette tour de préchauffage peut être avantageusement remplacée par une tour de pré calcination, où, en plus de l'échange de chaleur, on dispose de flammes complémentaires pour encore davantage préchauffer la matière et dans certains cas commencer la transformation chimique.

Dans ces tours, on peut ajouter à la matière première différents combustibles grossiers tels que les pneus déchiquetés ou plastiques broyés, et dans certains cas même des pneus entiers qui accompagnent la matière première et qui, grâce à la température élevée ainsi qu'à l'oxygène arrivant avec les gaz chauds, s'enflamment et ainsi contribuent à l'échauffement de la matière première.

Ces produits grossiers sont plus difficiles à manutentionner, à extraire et à doser. Les moyens classiques de stockage - extraction formés d'un silo approvisionné par un élévateur, suivi d'un extracteur conventionnel, d'un doseur et d'un convoyeur, ne peuvent convenir en raison des phénomènes de voûtage, de bourrage et de sortie par paquets observés au niveau de l'extracteur.

Par le document US4645065, une installation de stockage et d'alimentation d'un four pour pneus déchiquetés est connue. L'extraction se fait par des vis horizontales en fond de stock. Ce type de solutions présente l'inconvénient que le débit de sortie de l'extracteur est très difficile à fiabiliser et est sujet à des blocages et des irrégularités. Quand un tel débit arrive sur un doseur à bande, il est impossible de le réguler correctement. Un doseur à bande nécessite qu'on l'alimente avec un débit suffisamment régulier pour pouvoir produire un débit parfaitement régulier.

Les mêmes inconvénients sont observés dans le cas d'une cuve de stockage horizontale dont l'extraction s'effectue horizontalement par un tapis ou des vérins poussoirs. Le produit arrivant très irrégulièrement s'avère particulièrement difficile à doser

Une installation de stockage et d'alimentation de déchets divers, allant du fin au grossier et aussi pneus entiers, est connue par le document FR2924202. L'extraction est effectuée par un extracteur à tablier métallique incliné avec tambour écrêteur tournant dans le sens contraire du tablier. Le tablier extrait le produit, le tambour ramenant l'excès de produit vers l'intérieur de la trémie. Elle comprend au moins une réserve principale, un moyen d'amenée transférant les produits de cette réserve principale à au moins une réserve tampon de laquelle ils sont évacués en quantités dosées à l'aide d'un extracteur à tablier combiné à un écrêteur tournant en sens inverse pour renvoyer le surplus de produit vers l'intérieur de la trémie et ainsi éviter des blocages, puis repris et acheminés par un transporteur incliné vers une entrée auxiliaire d'un four. Ces extracteurs résolvent une partie du problème décrit ci-dessus. En effet, on n'observe pas de blocages à la sortie de l'extracteur et le débit est bien plus régulier que dans les solutions classiques. Le document FR2924202 divulgue un dispositif d'extraction dosée de produits selon le préambule de la revendication 1.

Cette solution présente néanmoins des inconvénients. L'extracteur étant séparé de l'entrée du four par un transporteur incliné, les produits mettent un certain temps à parcourir la distance entre l'extracteur et le four. Le réglage du débit à l'entrée du four étant pratiqué au niveau de l'extracteur, la position de celui-ci rend impossible d'ajuster ce débit d'entrée avec une réactivité satisfaisante. Une solution possible est donc d'amener l'extracteur en haut du transporteur incliné, juste avant l'entrée du four. Mais cette solution amène de nouveaux problèmes, les techniques de dosage de l'état de l'art ne pouvant être appliquées. D'une part, l'utilisation d'un doseur à bande n'est pas souhaitable, car l'espace entre le transporteur incliné et l'entrée du four est très réduit. D'autre part, le dosage par pesée de l'extracteur divulgué dans le document FR2924202 n'est pas possible, car l'alimentation de l'extracteur provenant du transporteur incliné est continue, et son poids à un instant donné n'est donc pas significatif.

La présente invention a pour objet de pallier au moins en partie à ces inconvénients. A cet effet, elle propose un dispositif d'extraction de produits selon la revendication 1.

Grâce à ces dispositions, l'installation selon l'invention permet de regrouper les fonctions d'extraction et de dosage à débit régulier et précis dans une machine unique et compacte.

Selon d'autres caractéristiques :
- ledit dispositif peut comprendre des cornières disposées au-dessus de ladite bande souple, et fixées auxdites palettes en pinçant ladite bande souple, les cornières pouvant ainsi améliorer l'entrainement des produits dans la partie inclinée de l'extracteur vers le haut,
- ledit moyen d'entrainement peut comporter un moyen de guidage, lequel comprend une partie libre verticalement, disposée au droit dudit tronçon de pesage et supportée par des pesons, de sorte à permettre une pesée des palettes situées dans le tronçon de pesage, constituant un moyen simple et robuste de réalisation,
- ledit moyen de pesage peut comporter un rail de pesage, et chaque palette peut comporter un moyen de désolidarisation verticale par rapport audit moyen d'entrainement, et un galet de palette configuré pour coopérer avec ledit rail de pesage pour soulever ladite palette le long d'un tronçon de pesage, ledit rail de pesage étant disposé sur au moins un peson configuré pour peser les palettes soulevées ;, de telles dispositions permettant d'effectuer un pesage plus précis du fait de la réduction de l'influence des tensions présentes dans le moyen d'entrainement,
- ledit moyen de désolidarisation verticale peut comporter un guide de palette disposé sur ladite palette, et un noyau disposé sur ledit moyen d'entrainement, configuré pour coopérer avec ledit guide de palette de sorte à permettre une liberté de translation verticale desdites palettes par rapport au moyen d'entrainement, constituant un moyen simple et robuste de réalisation,
- ledit rail de pesage peut comporter une pente d'entrée et une pente de sortie, et la longueur dudit rail de pesage et sa position verticale peuvent être configurés pour que la distance entre le premier point de contact d'un galet de palette arrivant sur ledit rail de pesage, et le début de la pente de sortie correspond à un nombre entier de distances entre deux galets de palette successifs, ceci facilitant l'entrée des galets de palette sur les rails de pesage, tout en minimisant les perturbations de pesées induites par l'évolution des galets de palette sur les pentes d'entrée et de sortie,
- ledit rail de pesage peut comporter une pente d'entrée et une pente de sortie, et ledit rail de pesage être constitué d'une partie centrale et de deux parties d'extrémité désolidarisées de ladite partie centrale, de préférence par une coupe verticale en biseau, les pentes d'entrée et de sortie étant disposées sur les parties d'extrémité, et seule la partie centrale étant pesée ; de telles dispositions permettent d'éviter de perturber la pesée par le choc d'arrivée sur la pente, et/ou par les effets de la montée ou de la descente d'un galet le long d'une pente.
- ledit moyen d'entraînement peut comporter un moteur disposé à la jonction entre ladite pente ascendante et ladite partie horizontale, de sorte à actionner ledit moyen d'entrainement au niveau de la jonction, ceci permettant une tension du moyen d'entraînement satisfaisante dans ladite pente ascendante et moins élevée dans ladite partie horizontale afin de moins influer sur le pesage,
- ledit tambour écrêteur peut être équipé d'hélices, typiquement combinées à des ailettes, ce qui permet une extraction à débit encore plus régulier.

La présente invention sera mieux comprise à la lecture de la description détaillée qui fait suite, en référence aux figures annexées dans lesquelles :
- La figure 1 est une vue d'ensemble en perspective de l'installation,
- La figure 2 est une vue en coupe longitudinale de l'extracteur doseur selon l'invention,
- La figure 3 est une vue de côté d'un premier mode de réalisation du module de dosage de l'extracteur doseur de la fig. 2,
- La figure 4 est une vue en détail d'un deuxième mode de réalisation d'une palette du tablier de l'extracteur doseur de la fig. 2,
- La figure 5 est une vue de côté du deuxième mode de réalisation du module de dosage de l'extracteur doseur de la fig. 2,

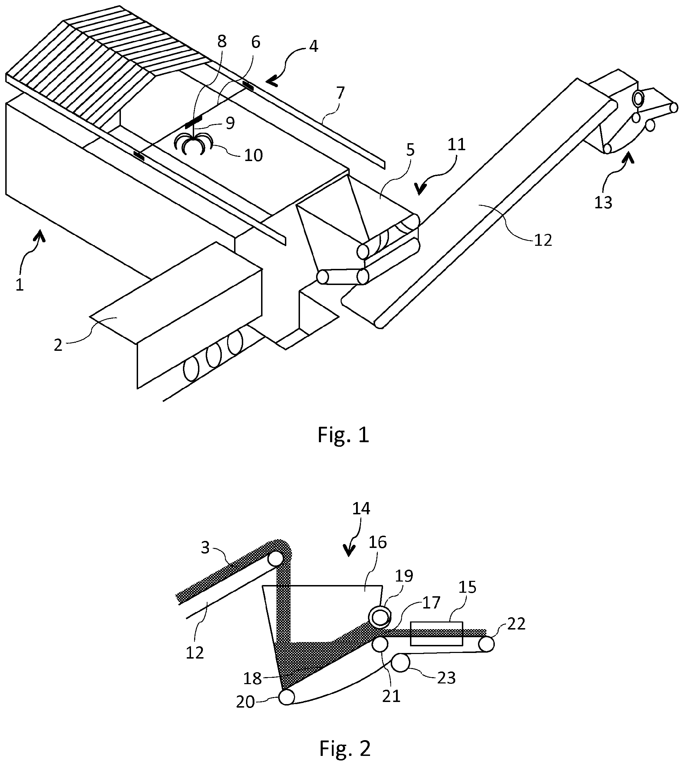

Comme illustré en fig. 1, l'installation débute par une réserve principale de produits 1 dans laquelle un camion 2 peut décharger son contenu de produits 3. La réserve principale 1 peut être abritée ou non, de plein pied ou en forme de fosse. Les produits 3 peuvent être stockés dans la réserve principale en attendant leur utilisation dans la suite de l'installation.

Au-dessus de la réserve se déplace un moyen d'amenée 4, par exemple un pont roulant automatique à grappin, transférant les produits 3 de cette réserve principale 1 à une réserve tampon 5.

Le pont roulant est constitué d'une poutre roulante 6, qui se déplace le long de deux rails 7 placés des deux côtés les plus longs du bâtiment, en haut de ce bâtiment. Sur cette poutre roulante se déplace un chariot 8 équipé d'un treuil, dont le câble 9 supporte un grappin 10. Les différents mouvements horizontaux et verticaux sont assurés par des moteurs électriques embarqués, dont l'alimentation depuis une armoire fixe dans le bâtiment est assurée par l'intermédiaire de deux guirlandes, l'une d'un point fixe vers la poutre roulante 6, l'autre de la poutre roulante vers le chariot 8. Ces guirlandes permettent de déplacer toujours le bout des câbles électriques avec le chariot 8, respectivement la poutre roulante 6.

Le grappin 10 est un organe de préhension des produits 3 sous forme de pince métallique, actionné par des vérins hydrauliques. Le moteur hydraulique est installé sur le grappin 10 même afin de réduire au minimum les longueurs de tuyaux hydrauliques nécessaires. Il est relié électriquement à une alimentation fixe au niveau du pont roulant par l'intermédiaire d'un enrouleur, afin d'ajuster constamment la longueur du câble électrique à celle du câble qui porte le grappin 10, et d'assurer ainsi l'alimentation électrique du moteur hydraulique du grappin 10 en toute position dudit grappin 10.

Les produits 3 sont ensuite évacués en quantités dosées à l'aide d'un premier extracteur 11, qui peut être un extracteur classique de l'état de l'art. Le niveau de performances de ce premier extracteur 11 en termes de contrôle de débit n'est pas essentiel car un moyen supplémentaire de contrôle de débit est présent plus loin dans l'installation.

Les produits sont ensuite repris et acheminés par un transporteur incliné 12 de préférence à bande lisse, pour conserver un maximum de flexibilité par rapport à la nature des produits utilisés.

Une fois à hauteur d'une entrée auxiliaire d'un four, les produits sont évacués par un extracteur doseur 13 contrôlant le débit d'entrée des produits dans le four. L'extracteur doseur 13 illustré en fig. 2 réunit en une seule machine compacte un module d'extraction 14 et d'un module de dosage 15.

Les produits sont ainsi d'abord versés dans une trémie 16 du module d'extraction 14 en forme de pyramide inversée, présentant une sortie latérale 17 et équipée d'un tablier 18 coopérant avec un tambour écrêteur 19.

Le tablier 18 est incliné au niveau de la trémie 16 à au moins 30° par rapport au plan de sortie des produits 3 de la trémie 16. Après la sortie latérale 17, le tablier 16 est prolongé sur un plan sensiblement horizontal, afin de passer dans le module de dosage 15. Le tablier 16 est entraîné par deux chaines de part et d'autre du module d'extraction 14, circulant chacune entre trois pignons, un pignon amont 20, un pignon d'extraction 21 et un pignon aval 22. Le pignon amont 20 est disposé en bas de la trémie 16, à l'opposé de la sortie latérale 17. Le pignon d'extraction 21 est situé sensiblement à la verticale du tambour écrêteur 19, délimitant avec le tambour écrêteur 19 la sortie latérale 17. Le pignon aval 22 est situé sensiblement à l'horizontale du pignon d'extraction 21, de manière à former un parcours horizontal pour le tablier 18 en sortie de la trémie 16. Le tablier 18 passe encore par un pignon de renvoi 23 situé sous le module de dosage. Le pignon de renvoi 23 permet de soutenir la chaine et de la faire revenir horizontalement sous le module de dosage, avant de descendre jusqu'au pignon amont 20.

On peut motoriser les pignons aval 22, par exemple par un motoréducteur disposé sur l'un desdits pignons aval 22, et un axe reliant les deux pignons aval 22. On peut aussi disposer un motoréducteur sur chacun des pignons aval.

Une telle motorisation assure une bonne tension de la chaine, à la fois le long de la pente sous la trémie, et sur la partie horizontale.

En alternative, ou en complément, on peut motoriser les pignons d'extraction, là aussi soit par un seul motoréducteur, soit par deux motoréducteurs disposés chacun sur l'un des pignons.

Une telle motorisation permet d'obtenir une tension plus faible de la chaine sur la partie horizontale, et donc de réduire les effets parasites de la tension de chaine sur le pesage. Dans le cas où cette motorisation est en alternative, et qu'il n'y a pas de moteur sur les pignons aval, on peut disposer judicieusement le pignon de renvoi 23 pour obtenir une tension suffisante de la chaine dans la partie horizontale pour permettre un bon fonctionnement de l'ensemble. Le pignon de renvoi 23 peut ainsi être disposé plus bas que sa position représentée à la fig. 2. On peut même envisager, selon les dimensions de l'installation d'extraction, de supprimer le pignon de renvoi 23, et de profiter du poids de l'ensemble du brin retour pour imprimer une tension à la chaine au niveau des pignons aval 22.

Le sens de rotation du tambour écrêteur 19 est le même que celui du pignon d'extraction 21. Ainsi, le tambour écrêteur 19 tourne dans le sens contraire de la sortie des produits 3, c'est-à-dire travaille à refouler les produits 3 vers l'intérieur de la trémie 16 comme un organe de rabattement alors que le tablier 18 emporte ces mêmes produits 3 en les évacuant vers le module de dosage 15. De plus le tambour écrêteur 19 est équipé d'hélices permettant non seulement de refouler les produits 3 vers l'intérieur de la trémie 16, mais en plus de les ramener vers l'axe central du tablier 18. Pour ce faire, on laisse une plage sans hélice à proximité de cet axe, équipée de petites ailettes. On crée ainsi une zone avec une hauteur importante entre le tablier 18 et le tambour écrêteur 19, tout en gardant une section de sortie globale réduite, permettant ainsi une vitesse de tablier 18 suffisamment élevée, en particulier pour un débit faible.

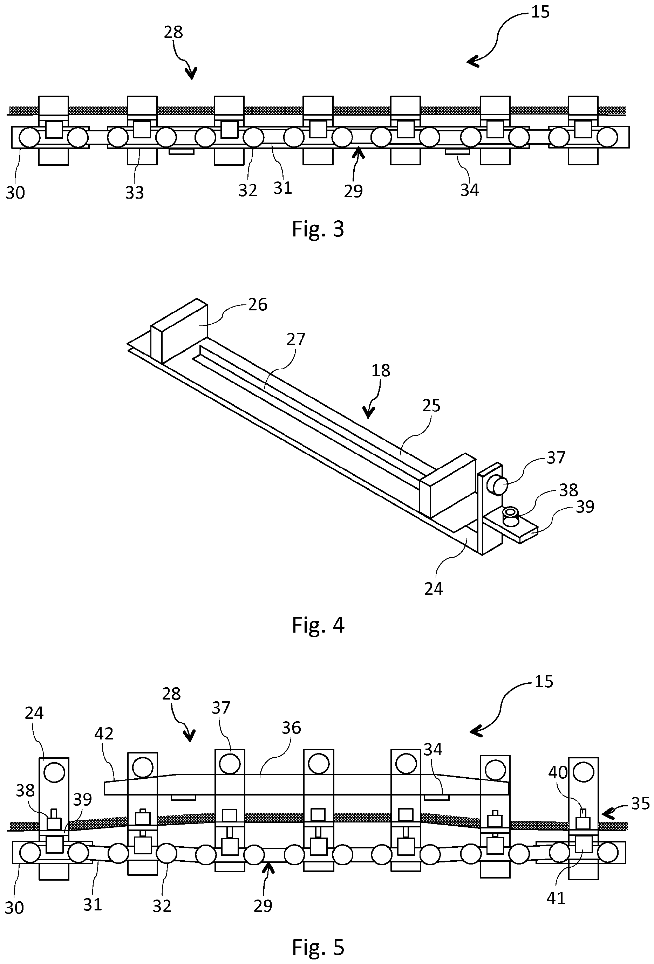

Comme détaillé sur la fig. 4, le tablier 18 composé de palettes 24, qui dans un mode de réalisation préféré peuvent être métalliques, est recouvert par une bande souple 25, par exemple en caoutchouc. La bande souple 25 rend le tablier 18 étanche vers le bas, et vers les côtés par le moyen de rives de bande 26. Au-dessus de la bande souple 25 sont fixés des cornières 27, qui permettent au tablier 18 d'emporter les produits 3 dans sa partie inclinée vers le haut du module d'extraction 14.

Deux modes de réalisation du module de dosage 15 de l'extracteur doseur 13 sont illustrés aux fig. 3 et 5. Dans les deux cas, le dosage est effectué automatiquement. En fonction d'une consigne de débit correspondant aux besoins du four à alimenter, on ajuste la vitesse du tablier 18 à partir des données issues de la pesée en continu des produits 3. La pesée est effectuée sur un tronçon de pesage 28 du parcours du tablier 18 situé après le module d'extraction 14. Les palettes 24 du tablier 18 sont supportées et entraînées par un moyen d'entraînement 29, par exemple deux chaines 29, circulant dans un moyen de guidage 30 comme par exemple des guides de chaine et composée de maillons de chaine 31 et de galets de chaine 32.

Dans un premier mode de réalisation, illustré à la fig. 3, les moyens de guidage 30 sont coupés au niveau du tronçon de pesage 28. La partie 33 des moyens de guidage 30 se trouvant au niveau de ce tronçon est libre en translation verticale et repose sur des pesons 34, de manière à ce que la chaine 29 ainsi que les palettes 24 qu'elle supporte puissent être pesés. Ainsi dans ce mode de réalisation, la chaine 29 reste solidaire des palettes 24 lors de la pesée.

Dans un deuxième mode de réalisation illustré aux fig. 4 et 5, le module de dosage 15 comprend un moyen de désolidarisation verticale 35 des palettes 24 par rapport à la chaine 29, permettant un pesage des palettes 24 seules, débarrassées du poids de la chaine 29, ainsi que de composantes verticales des tensions présentes dans la chaine 29.

Dans le but de peser les palettes 24 indépendamment des chaines 29, le module de dosage 15 peut comprendre deux rails de pesage 36. Les palettes 24 peuvent être en forme de U dans le sens de la section de la bande souple 25. Chacune des branches verticales du U peut comprendre un galet de palette 37. Lorsqu'une palette 24 arrive dans le module de dosage 15, ses galets de palette 37 coopèrent avec lesdits rails de pesage 36. La palette 24 est alors portée par lesdits rails de pesage 36, avec les produits 3 qu'elle transporte.

Le moyen de désolidarisation verticale 35 peut comporter un guide de palette 38 solidaire de la palette 24, par exemple par le moyen d'un support de guide 39 disposé au niveau de chaque extrémité de la palette 24. Le maillon de chaine 31 peut comporter un noyau 40, configuré pour s'insérer dans un guide de palette 38, mobile en translation verticale. Ainsi la chaine 29 entraine toujours la palette 24 dans le sens d'avancée de la chaine 29, mais ne la porte plus, et la laisse libre en translation verticale.

Le noyau 40 est fixé au maillon de chaine 31 par exemple par l'intermédiaire d'un support de noyau 41,

Les palettes 24 se trouvant dans le module de dosage 15 ne sont ainsi plus supportées par les chaines 29 mais par les rails de pesage 36, de sorte que les pesons 34 mesurent le poids des palettes 24 avec le produit 3 qu'ils portent, mais sans le poids ni les forces verticales induits par la chaine 29.

Les rails de pesage 36 peuvent comporter des pentes 42 d'entrée et de sortie, pour adoucir l'arrivée sur le rail de pesage 36 des galets de palette 37, ainsi que leur départ de ce rail de pesage 36. On peut également prévoir que les rails de pesage 36 sont constitués de trois parties, une partie centrale rectiligne, et deux parties d'extrémité comportant chacune l'une desdites pentes 42. On peut alors prévoir de ne peser que la partie centrale rectiligne ; de cette façon les efforts induits par les pentes, ainsi que par l'arrivée d'un galet sur la pente sont repris par une fixation desdites parties d'extrémité, et le pesage n'en est aucunement affecté. On peut prévoir en outre une coupe verticale en biseau - biseau visible en vue de dessus - à la jonction entre les parties d'extrémité et la partie centrale, de sorte que les galets passent en douceur de l'une à l'autre.

La longueur des rails de pesage 36 peut être ajustée afin de supporter à tout moment le même nombre entier de palettes 24. Pour ce faire, il faut qu'à l'instant même où un galet de palette 37 s'engage sur le rail de pesage 36, un autre galet de palette 37 quitte le rail de pesage 36. La longueur des rails de pesage 36 peut donc être choisie égale à un nombre entier de distances entre des galets de palette 37 successifs.

Dans le cas d'un rail de pesage 36 en trois parties, c'est la partie centrale qui doit alors supporter à tout moment le même nombre de palettes 24.

Par ailleurs, il peut arriver que la montée d'un galet de palette 37 sur le rail de pesage 36 ne soit pas instantanée, et on peut vouloir faire en sorte que pendant la période où un galet de palette 37 monte sur le rail de pesage 36, un autre en descend. Cela permet d'exclure ces périodes des mesures de poids prises en compte, et de pouvoir disposer de mesures à nombre de galets de palette 37 constant entre ces périodes. Pour ce faire, la longueur des rails de pesage 36 peut être choisie de sorte à ce que la distance entre le premier point de contact d'un galet de palette 37 arrivant sur rail de pesage 36 et le début de la pente de sortie 42 soit égale à un nombre entier de distances entre des galets de palette 37 successifs.

Hors du module de dosage 15, les supports de guide 39 sont supportés par les supports de noyau 41 et la palette 24 est ainsi supportée par les maillons de chaine 31. Dans le module de dosage, lorsque la palette 24 est portée par les rails de pesage 36, les guides de palette 38 sont libres en translation verticale par rapport aux noyaux 40, et les palettes 24 sont donc libres en translation verticale par rapport aux maillons de chaine 31. On peut alors peser les palettes 24, et cette pesée n'est pas perturbée par les tensions présentes dans la chaine 29. Comme illustré sur la fig. 5, on peut interrompre le moyen de guidage 30 au droit du rail de pesage 36 afin d'éviter de soulever intempestivement les palettes 24 par accumulation de poussière dans un tel guidage s'il n'était pas interrompu, ce qui pourrait perturber la mesure des pesons 34. La chaine 29 prend alors une forme de chainette plus ou moins incurvée, selon le niveau de tension présent dans la chaine 29.

L'expression « moyen de désolidarisation verticale » doit ici se comprendre comme un moyen de désolidarisation perpendiculaire à la chaine. Il s'agit bien de la verticale au niveau du tronçon de pesage 28 dans lequel la chaine 29 est sensiblement horizontale.

Bien entendu on peut envisager d'autres moyens de désolidarisation verticale, comme par exemple un noyau disposé sur la palette 24 et un cylindre creux sur les maillons de chaine 31, dans lequel le noyau peut coulisser.

Selon les cas, le premier mode de réalisation de la fig. 3 peut être choisi pour obtenir un système plus robuste du fait de sa simplicité L'avantage du deuxième mode de réalisation des fig. 4 et 5 est que les palettes 24 étant désolidarisées de la chaine 29 lors de leur pesée, les efforts de la chaine 29 ne leur sont plus transmis et la pesée donne un résultat plus précis.

Quel que soit le mode de réalisation utilisé, il est possible de placer des pesons sous l'extracteur doseur 13, afin de contrôler le poids de produits 3 contenus dans la trémie 16 à chaque instant. Si la quantité de produits 3 descend sous un seuil minimum, il est possible d'augmenter le débit d'extraction au niveau du premier extracteur 11 afin que l'extracteur doseur 13 puisse répondre aux besoins de débit de produits 3 à sa sortie.

## Revendications

1. Dispositif d'extraction dosée de produits (3), par exemple de pneus usagés déchiquetés, déchets municipaux broyés grossièrement, déchets commerciaux, papiers, textiles, etc. comprenant une trémie (16) permettant de stocker une certaine quantité desdits produits (3), un moyen d'entraînement (29) de type chaîne le long d'une pente ascendante, un tambour écrêteur (19) situé dans la zone de l'extrémité avant de ladite pente ascendante, **caractérisé en ce que** ledit dispositif comprend des palettes (24) entraînées latéralement par ledit moyen d'entraînement (29), **en ce que** ledit dispositif comporte une bande souple (25) attachée auxdites palettes (24), **en ce que** ledit tambour écrêteur (19) est situé au-dessus desdites palettes (24), et **en ce que** ledit moyen d'entraînement (29) s'étend au-delà de la pente ascendante sur une partie horizontale, et que ledit dispositif comporte un moyen de pesage disposé sur ladite partie horizontale, configuré pour permettre une régulation de la vitesse dudit moyen d'entraînement (29) en vue d'effectuer un dosage desdits produits (3).

2. Dispositif selon la revendication précédente, comprenant des cornières (27) disposées au-dessus de ladite bande souple (25), et fixées auxdites palettes (24) en pinçant ladite bande souple (25).

3. Dispositif selon l'une des revendications précédentes, dans lequel ledit moyen d'entrainement (29) comporte un moyen de guidage (30), lequel comprend une partie (33) libre verticalement, disposée au droit d'un tronçon de pesage (28) et supportée par des pesons (34), de sorte à permettre une pesée des palettes (24) situées dans le tronçon de pesage (28).

4. Dispositif selon l'une des revendications 1 à 2, dans lequel ledit moyen de pesage comporte un rail de pesage (36), et chaque palette (24) comporte un moyen de désolidarisation verticale (35) par rapport audit moyen d'entrainement (29), et un galet de palette (37) configuré pour coopérer avec ledit rail de pesage (36) pour soulever ladite palette (24) le long dudit tronçon de pesage (28), ledit rail de pesage (36) étant disposé sur au moins un peson (34) configuré pour peser les palettes (24) soulevées.

5. Dispositif selon la revendication précédente, dans lequel ledit moyen de désolidarisation verticale (35) comporte un guide de palette (38) disposé sur ladite palette, et un noyau (40) disposé sur ledit moyen d'entrainement (29), configuré pour coopérer avec ledit guide de palette (38) de sorte à permettre une liberté de translation verticale desdites palettes (24) par rapport au moyen d'entrainement (29).

6. Dispositif selon l'une des revendications 4 ou 5, dans lequel ledit rail de pesage (36) comporte une pente (42) d'entrée et une pente (42) de sortie, et la longueur dudit rail de pesage (36) et sa position verticale sont configurés pour que la distance entre le premier point de contact d'un galet de palette (37) arrivant sur ledit rail de pesage (36), et le début de la pente (42) de sortie correspond à un nombre entier de distances entre deux galets de palette (37) successifs.

7. Dispositif selon l'une des revendications 4 ou 5, dans lequel ledit rail de pesage (36) comporte une pente (42) d'entrée et une pente (42) de sortie, et ledit rail de pesage (36) est constitué d'une partie centrale et de deux parties d'extrémité désolidarisées de la partie centrale, de préférence par un coupe verticale en biseau, les pentes (42) d'entrée et de sortie étant disposées sur les parties d'extrémité, et seule la partie centrale étant pesée.

8. Dispositif selon l'une des revendications précédentes, dans lequel ledit moyen d'entrainement (29) comporte un moteur disposé à la jonction entre ladite pente ascendante et ladite partie horizontale, de sorte à actionner ledit moyen d'entrainement (29) au niveau de ladite jonction.

9. Dispositif selon l'une des revendications précédentes, dans lequel ledit tambour écrêteur (19) est équipé d'hélices, typiquement combinées à des ailettes.

## Patentansprüche

1. Vorrichtung zur dosierten Extraktion von Produkten (3), zum Beispiel zerkleinerte Altreifen, grob zerkleinerte Kommunalabfälle, Gewerbeabfälle, Papier, Textilien usw. umfassend einen Trichter (16) zum Lagern einer bestimmten Menge der Produkte (3), ein kettenartiges Antriebsmittel (29) entlang einer Steigung, eine Kalibriertrommel (19), die im Bereich des vorderen Endes der Steigung angeordnet ist, **dadurch gekennzeichnet, dass** die Vorrichtung Paletten (24) umfasst, die seitlich von dem Antriebsmittel (29) angetrieben werden, dass die Vorrichtung ein flexibles Band (25) aufweist, das an den Paletten (24) befestigt ist, dass die Kalibriertrommel (19) über den Paletten (24) angeordnet ist, und dass sich das Antriebsmittel (29) nach der Steigung in das horizontale Teil hinaus erstreckt, und dass die Vorrichtung eine Wägeeinrichtung beinhaltet, die auf dem horizontalen Teil angeordnet ist und konfiguriert sind, um eine Regelung der Geschwindigkeit des Antriebsmittels (29) zum Durchführen einer Dosierung der Produkte (3) zu ermöglichen.

2. Vorrichtung nach dem vorstehenden Anspruch, umfassend Winkel (27), die über dem flexiblen Streifen (25) angeordnet und an den Paletten (24) durch Einklemmen des flexiblen Bandes (25) befestigt sind.

3. Vorrichtung nach einem der vorhergehenden Ansprüche, wobei das Antriebsmittel (29) ein Führungsmittel (30) umfasst, das ein vertikal freies Teil (33) umfasst, das in Form eines Wägeabschnitts (28) angeordnet und von Wägezellen (34) gestützt ist, um das Wiegen der im Wägeabschnitt (28) befindlichen Paletten (24) zu ermöglichen.

4. Vorrichtung nach einem der Ansprüche 1 bis 2, wobei die Wiegeeinrichtung eine Wiegeschiene (36) umfasst und jede Palette (24) ein Vertikalentkopplungsmittel (35) in Bezug auf das Antriebsvmittel (29) und eine Palettenrolle (37) umfasst, die konfiguriert ist, um mit der Wiegeschiene (36) zusammenzuwirken, um die Palette (24) entlang des Wiegeabschnitts (28) anzuheben, wobei die Wiegeschiene (36) auf mindestens einer Wiegezelle (34) angeordnet ist, die konfiguriert ist, um die angehobenen Paletten (24) zu wiegen.

5. Vorrichtung nach dem vorstehenden Anspruch, wobei das Vertikalentkopplungsmittel (35) eine auf der Palette angeordnete Palettenführung (38) und einen auf dem Antriebsmittel (29) angeordneten Kern (40) umfasst, der so konfiguriert ist, dass er mit der Palettenführung (38) zusammenwirkt, um eine vertikale Verschiebung der Paletten (24) in Bezug auf das Antriebsmittel (29) zu ermöglichen.

6. Vorrichtung nach einem der Ansprüche 4 oder 5, wobei die Wägeschiene (36) eine Einlaufneigung (42) und eine Auslaufneigung (42) aufweist und die Länge der Wägeschiene (36) und ihre vertikale Position so konfiguriert sind, dass der Abstand zwischen dem ersten Kontaktpunkt einer auf der Wägeschiene (36) ankommenden Palettenrolle (37) und dem Beginn der Auslaufneigung (42) einer ganzen Anzahl von Abständen zwischen zwei aufeinanderfolgenden Palettenrollen (37) entspricht.

7. Vorrichtung nach einem der Ansprüche 4 oder 5, wobei die Wägeschiene (36) eine Einlaufneigung (42) und eine Auslaufneigung (42) aufweist und die Wägeschiene (36) aus einem Mittelteil und zwei Endteilen besteht, die vom Mittelteil getrennt sind, vorzugsweise durch einen vertikalen Schrägschnitt, wobei die Ein- und Auslaufneigungen (42) an den Endteilen angeordnet sind und nur der Mittelteil gewichtet ist.

8. Vorrichtung nach einem der vorhergehenden Ansprüche, wobei das Antriebsmittel (29) einen Motor aufweist, der an der Verbindungsstelle zwischen der Aufwärtsneigung und dem horizontalen Teil angeordnet ist, um das Antriebsmittel (29) an der Verbindungsstelle zu betreiben.

9. Vorrichtung nach einem der obigen Ansprüche, wobei die Kalibriertrommel (19) mit Spiralen ausgestattet ist, die typischerweise mit Rippen kombiniert sind.

## Claims

1. Device for dosed extraction of products (3), such as shredded used tyres, coarsely ground municipal waste, commercial waste, paper, textiles, etc. comprising a hopper (16) for storing a given quantity of said products (3), chain-type driving means (29) along an upward slope, a calibrator drum (19) located in the area of the forward end of said upward slope, **characterized in that** said device comprises pallets (24) laterally driven by said driving means (29), **in that** said device has a flexible band (25) attached to said pallets (24), **in that** said calibrated drum (19) is located above said pallets (24), and **in that** said driving means (29) extends beyond the upward slope on the horizontal portion, and **in that** said device includes a weighing means arranged on said horizontal part, configured to allow regulation of the speed of said driving means (29) for dosing said products (3).

2. Device according to the previous claim, comprising angle brackets (27) arranged above said flexible band (25), and fixed to said pallets (24) by pinching said flexible band (25).

3. Device according to one of the previous claims, wherein said driving means (29) comprises a guiding means (30), which comprises a vertically free part (33), located at the level of a weighing section (28) and supported by load cells (34), so as to allow weighing of the pallets (24) located in the weighing section (28).

4. Device according to one of claims 1 to 2, wherein said weighing means comprises a weighing rail (36), and each pallet (24) comprises a vertical uncoupling means (35) with respect to said driving means (29), and a pallet roller (37) configured to cooperate with said weighing rail (36) to lift said pallet (24) along said weighing section (28), said weighing rail (36) being arranged on at least one load cell (34) configured to weigh the lifted pallets (24)

5. Device according to the previous claim, wherein said vertical uncoupling means (35) comprises a pallet guide (38) arranged on said pallet, and a core (40) arranged on said driving means (29), configured to cooperate with said pallet guide (38) so as to allow freedom of vertical translation of said pallets (24) with respect to the driving means (29).

6. Device according to one of claims 4 or 5, wherein said weighing rail (36) has an entry slope (42) and an exit slope (42), and the length of said weighing rail (36) and its vertical position are configured so that the distance between the first contact point of a pallet roller (37) arriving on said weighing rail (36), and the beginning of the exit slope (42) corresponds to an integer number of distances between two successive pallet rollers (37).

7. Device according to one of claims 4 or 5, wherein said weighing rail (36) has an entry slope (42) and an exit slope (42), and said weighing rail (36) consists of a central part and two end parts separated from the central part, preferably by a vertical bevelled cut, the entry and exit slopes (42) being arranged on the end parts, and only the central part being weighed.

8. Device according to one of the previous claims, wherein said driving means (29) comprises an engine arranged at the junction between said upward slope and said horizontal portion, so as to actuate said driving means (29) at said junction.

9. Device according to one of the previous claims, wherein said calibrator drum (19) is equipped with helicoids, typically combined with fins.
